(19) Europäisches Patentamt
European Patent Office
Office européen des brevets

(11) Veröffentlichungsnummer: **0 001 823**
**A2**

# (12) EUROPÄISCHE PATENTANMELDUNG

(21) Anmeldenummer: 78101260.4

(22) Anmeldetag: 28.10.78

(51) Int. Cl.$^2$: **C 08 L 69/00**
C 08 K 5/15, C 08 K 5/55

(30) Priorität: 09.11.77 DE 2750043

(43) Veröffentlichungstag der Anmeldung: 16.05.79 Patentblatt 79/10

(84) Benannte Vertragsstaaten: DE FR GB NL

(71) Anmelder: **Bayer Aktiengesellschaft**
**Zentralbereich Patente,Marken und Lizenzen Bayerwerk**
**D-5090 Leverkusen 1(DE)**

(72) Erfinder: **Eimers, Erich, Dr.**
**Kreuzbergstrasse 136**
**D-4150 Krefeld 1(DE)**

(72) Erfinder: **Dhein, Rolf, Dr.**
**Deswatinesstrasse 30**
**D-4150 Krefeld 1(DE)**

(72) Erfinder: **Cohnen, Wolfgang, Dr.**
**Heymannstrasse 36**
**D-5090 Leverkusen 1(DE)**

(54) **Verwendung von Borsäureestern zum Stabilisieren von phosphitfreien Polycarbonaten und die erhaltenen stabilisierten Polycarbonatformmassen.**

(57) Gegenstand der vorliegenden Erfindung ist die Verwendung von oxetangruppenhaltigen Borsäureestern zum Stabilisieren von phosphitfreien Polycarbonaten. Die zu verwendenden Borsäureester können eine oder mehrere Oxetangruppen enthalten und werden in Mengen zwischen 0,01 und 1 Gew.-%, vorzugsweise 0,05 bis 0,2 Gew.-%, bezogen auf das

EP 0 001 823 A2

Croydon Printing Company Ltd.

BAYER AKTIENGESELLSCHAFT
Zentralbereich
Patente, Marken und Lizenzen

5090 Leverkusen, Bayerwerk
PS-by

BEZEICHNUNG GEÄNDERT ~~siehe Titelseite~~

Verwendung von Borsäureestern zum Stabilisieren von phosphitfreien Polycarbonaten

Gegenstand der vorliegenden Erfindung ist die Verwendung von oxetangruppenhaltigen Borsäureestern zum Stabilisieren von phosphitfreien Polycarbonaten. Die zu verwendenden Borsäureester können eine oder mehrere Oxetangruppen enthalten und werden in Mengen zwischen 0,01 und 1 Gew.-%, vorzugsweise 0,05 bis 0,2 Gew.-%, bezogen auf das Gewicht des reinen Polycarbonatharzes, eingesetzt.

Es ist bekannt, Polycarbonate mit Borsäureestern zu stabilisieren. (Siehe DT-PS 1 239 471 (Ue 2093) bzw. US-PS 3 321 435 (Ue 2093-A).

Es ist außerdem bekannt, Polycarbonate mit Oxetanverbindungen zu stabilisieren. (Siehe DT-AS 2 140 207 (Le A 13 917), DT-OS 2 255 639 (Le A 14 709) und DT-OS 2 658 849).)

Es ist außerdem bekannt, Polycarbonate durch Zusatz von Gemischen aus oxetangruppenhaltigen Borsäureestern und Phosphiten zu stabilisieren. (Siehe DT-OS 2 510 463 (Le A 16 231).)

Mit Ausnahme der Verwendung von Stabilisatormischungen gemäß DT-OS 2 510 463 haben die bislang bekannten Stabilisierungsmöglichkeiten bei extremer Belastung der Polycarbonate gewisse Nachteile, und zwar entweder keinen ausreichend hohen Thermostabilisierungseffekt oder keine ausreichend hohe Hydrolysefestigkeit.

Überraschend hat sich nun gezeigt, daß bei Verwendung von oxetangruppenhaltigen Borsäureestern ohne Mitverwendung von Phosphiten eine starke Thermostabilisierung des Polycarbonats gegen Licht und Wärme ohne Beeinträchtigung der Hydrolysefestigkeit des stabilisierten Polycarbonats erzielt wird.

Gegenstand der vorliegenden Erfindung sind somit auch phosphitfreie Polycarbonatformmassen, die dadurch gekennzeichnet sind, daß sie oxetangruppenhaltige Borsäureester in Mengen zwischen 0,01 und 1 Gew.-%, vorzugsweise zwischen 0,05 und 0,2 Gew.-%, bezogen auf das Gewicht des reinen Polycarbonatharzes, enthalten.

Gegenstand der vorliegenden Erfindung ist außerdem ein Verfahren zum Stabilisieren von phosphitfreien Polycarbonat-Formmassen, das dadurch gekennzeichnet ist, daß man oxetangruppenhaltige Borsäureester den phosphitfreien Polycarbonaten in Mengen zwischen 0,01 und 1 Gew.-%, vorzugsweise in Mengen zwischen 0,05 und 0,2 Gew.-%, bezogen auf das Gewicht des reinen Polycarbonatharzes, nach bekannten Methoden einarbeitet.

Gegenstand der vorliegenden Erfindung sind somit auch stabilisierte phosphitfreie Polycarbonatformmassen, die dadurch erhältlich sind, daß ihnen oxetangruppenhaltige Borsäureester in Mengen zwischen 0,01 und 1 Gew.-%, vor-

zugsweise in Mengen zwischen 0,05 und 0,2 Gew.-%, bezogen auf das Gewicht des reinen Polycarbonatharzes, eingearbeitet worden sind.

Die erfindungsgemäß verwendbaren oxetangruppenhaltigen Borsäureester können gegebenenfalls zusammen mit borfreien Oxetanverbindungen kombiniert eingesetzt werden, wobei in diesen Kombinationen das Molverhältnis von Boratomen zu Oxetangruppen zwischen 1:2 und 1:10, vorzugsweise zwischen 1:3 und 1:6 beträgt.

Anstelle der erfindungsgemäß verwendbaren oxetangruppenhaltigen Borsäureester können auch Mischungen aus oxetangruppenfreien Borsäureestern mit borfreien Oxetanverbindungen eingesetzt werden, wobei in diesen Mischungen das Molverhältnis von Boratomen zu Oxetangruppen zwischen 1:2 und 1:10, vorzugsweise 1:3 und 1:6 beträgt.

Erfindungsgemäß verwendbare oxetangruppenhaltige Borsäureester sind solche der Strukturformel (I)

$$\begin{array}{l} R_1\text{-O-B-}R_3 \\ \quad\quad\;\; | \\ \quad\quad\;\; O \\ \quad\quad\;\; | \\ \quad\quad\;\; R_2 \end{array} \qquad \text{(I)}$$

worin mindestens einer der Reste $R_1$, $R_2$ und $R_3$, der Rest eines oxetangruppenhaltigen Monoalkohols ist, während maximal 2 der Reste $R_1$, $R_2$ und $R_3$ Reste primärer, sekundärer oder tertiärer aliphatischer, cycloaliphatischer oder heterocyclischer, oxetangruppenfreier Monoalkohole oder oxetangruppenfreie Monohydroxyaryle sind.

Vorzugsweise geeignete oxetangruppenhaltige Monoalkohole sind die der Formel (II)

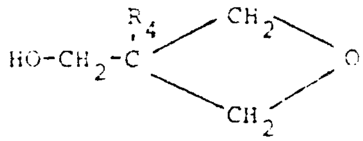

(II)

worin $R_4$, H, $C_1$-$C_{18}$-Alkyl, $C_3$-$C_{12}$-Cycloalkyl, gegebenenfalls alkylsubstituiertes $C_6$-$C_{14}$-Aryl, $C_7$-$C_{18}$-Aralkyl oder $-CH_2-O-R_5$ ist, wobei $R_5$ wiederum die für $R_4$ genannten Alkyl, Cycloalkyl, Aryl und Aralkyl sein kann.

Vorzugsweise ist $R_4$ ein $C_1$-$C_5$-Alkyl-Rest.

Geeignete oxetangruppenhaltige Monoalkohole der Formel (II) sind beispielsweise 3-Hydroxymethyloxetan, 3-Methyl-3-hydroxymethyloxetan, 3-Äthyl-3-hydroxymethyloxetan, 3-Pentyl-3-hydroxymethyloxetan, 3-Hexadecyl-3-hydroxymethyloxetan, 3-Octadecyl-3-hydroxymethyloxetan, 3-Cyclohexyl-3-hydroxymethyloxetan, 3-Phenyl-3-hydroxymethyloxetan, 3-p-Tolyl-3-hydroxymethyloxetan, 3-Benzyl-3-hydroxymethyloxetan, 3-Methoxymethyl-3-hydroxymethyloxetan, 3-Äthoxymethyl-3-hydroxymethyloxetan, 3-Butoxymethyl-3-hydroxymethyloxetan, 3-Octadecylmethyl-3-hydroxymethyloxetan, 3-Phenoxymethyl-3-hydroxymethyloxetan, 3-p-Tolyloxymethyl-3-hydroxymethyloxetan und 3-Benzyloxymethyl-3-hydroxymethyloxetan.

Weitere geeignete oxetangruppenhaltige Monoalkohole, die nicht der Formel (II) entsprechen, sind beispielsweise 3-Phenoxy-3-hydroxymethyloxetan, 3-p-Chlorphenoxy-3-hydroxymethyloxetan, 3-p-tert.-Butylphenoxy-3-hydroxymethyloxetan, 3-Acetyloxymethyl-3-hydroxymethyloxetan und 3-Stearoyloxymethyl-3-hydroxymethyloxetan.

Als oxetangruppenfreie Monoalkohole und Monohydroxyaryle zur Herstellung der Borsäureester der Formel I sind

beispielsweise primäre, aliphatische, oxetangruppenfreie $C_1$-$C_{18}$-Monoalkohole, sekundäre, aliphatische, oxetangruppenfreie $C_3$-$C_{18}$-Monoalkohole und tertiäre, aliphatische, oxetangruppenfreie $C_4$-$C_{18}$-Monoalkohole geeignet; ebenso geeignet sind beispielsweise sekundäre, cycloaliphatische, oxetangruppenfreie $C_3$-$C_{12}$-Monoalkohole, primäre, cycloaliphatische, oxetangruppenfreie $C_4$-$C_{12}$-Monoalkohole oder tertiäre, cycloaliphatische, oxetangruppenfreie $C_4$-$C_{12}$-Monoalkohole, geeignet sind beispielsweise auch primäre, sekundäre oder tertiäre heterocyclische oxetangruppenfreie $C_3$-$C_{12}$-Monoalkohole. Geeignete oxetangruppenfreie Monohydroxyverbindungen sind beispielsweise:

| | |
|---|---|
| Methylalkohol | Cyclohexylalkohol |
| Äthylalkohol | 2-Methyl-cyclohexylalkohol |
| N-Propylalkohol | Cyclobutanol |
| Isopropylalkohol | Cyclopropanol |
| N-Butyl-alkohol | Benzylalkohol |
| Isobutyl-alkohol | α-Methylbenzylalkohol |
| tert.-Butylalkohol | Tetrahydrofurfurylalkohol |
| n-Hexylalkohol | 5-Hydroxymethyl-5-äthyl-1,3-dioxan |
| 2-Äthyl-hexanol-1 | Äthylenglykolmonobutylester |
| Decylalkohol | Diacetin |
| Laurylalkohol | Trimethylolpropandiallyläther |
| Octacecylalkohol | Phenol |
| S-Äthylenthioglykol | 2,6-Diisobutyl-p-methylphenol |
| S-Dodecylthioglykol | α-Naphthol |
| | β-Naphthol |
| | p-Chlorphenol |

Erfindungsgemäß verwendbare oxetangruppenhaltige Borsäureester der Formel (I) sind beispielsweise

Tris-(2,2-dimethylenoxid-butyl)-borat,
Bis-(2,2-dimethylenoxid-butyl)-phenyl-borat,
2,2-Dimethylenoxid-butyl-bis-(phenyl)-borat,
Bis-(2,2-dimethylenoxid-butyl)-decyl-borat,
Bis-(2,2-dimethylenoxid-butyl)-p-tolyl-borat,
2,2-Dimethylen-butyl-bis-(o-chlorphenyl)-borat,
Bis-(2,2-dimethylenoxid-butyl)-benzyl-borat,
Bis-(2,2-dimethylenoxid-butyl)-octadecyl-borat,
Bis-(2,2-dimethylenoxid-butyl)-methyl-borat,
Bis-(2,2-dimethylenoxid-butyl)-cyclohexyl-borat,
2,2-Dimethylenoxid-butyl-bis-(decyl)-borat,
Tris-(2,2-dimethylenoxid-propyl)-borat,
Bis-(2,2-dimethylenoxid-propyl)-phenyl-borat,
2,2-Dimethylenoxid-propyl-bis-(phenyl)-borat,
Tris-(2,2-dimethylenoxid-octadecyl)-borat,
Tris-(2,2-dimethylenoxid-2-phenyl-ethyl)-borat,
Bis-(2,2-dimethylenoxid-2-phenyl-ethyl)-phenyl-borat,
Tris-(2,2-dimethylenoxid-2-p-tolyl-ethyl)-borat,
Tris-(2,2-dimethylenoxid-3-phenyl-propyl)-borat,
Tris-(2,2-dimethylenoxid-3-methoxy-propyl)-borat,
Tris-(2,2-dimethylenoxid-3-äthoxy-propyl)-borat,
Tris-(2,2-dimethylenoxid-3-butoxy-propyl)-borat,
Tris-(2,2-dimethylenoxid-3-octadecyloxy-propyl)-borat,
Tris-(2,2-dimethylenoxid-3-phenoxy-propyl)-borat und
Tris-(2,2-dimethylenoxid-3-benzyloxy-propyl)-borat.

Erfindungsgemäß verwendbare Borsäureester sind auch solche von oxetangruppenhaltigen Polyalkoholen, insbesondere von oxetangruppenhaltigen Dialkoholen. Die Borsäureester von oxetangruppenhaltigen Dialkoholen entsprechen den folgenden Strukturformeln (IIIa) oder (IIIb)

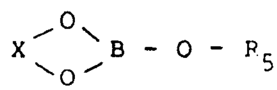

(IIIa)

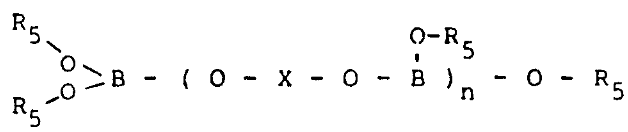

(IIIb)

worin X der Rest eines oxetangruppenhaltigen Dialkohols HO-X-OH mit X als oxetangruppenhaltigen organischen Rest mit beispielsweise 5 bis 20 C-Atomen, $R_5$ der Rest eines oxetangruppenfreien Monoalkohols oder eines oxetangruppenfreien Monohydroxyaryl und "n" eine ganze Zahl von 1 bis 10 einschließlich, vorzugsweise von 1 bis 3 einschließlich und insbesondere 1 oder 2 ist.

Geeignete oxetangruppenfreie Monoalkohole $R_5$-OH und oxetangruppenfreie Monohydroxyaryle $R_5$-OH sind die bereits für die Charakterisierung der Borsäureester (I) genannten.

Beispiele für oxetangruppenhaltige Dialkohole HO - X - OH sind

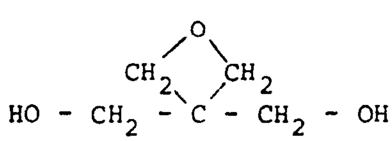

und

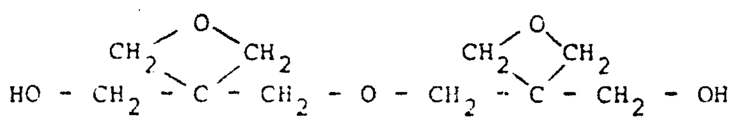

Borsäureester der Struktur (IIIa) bzw. (IIIb) sind beispielsweise

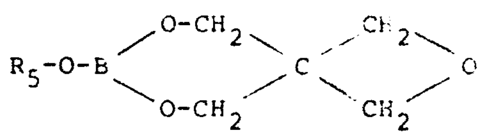

und

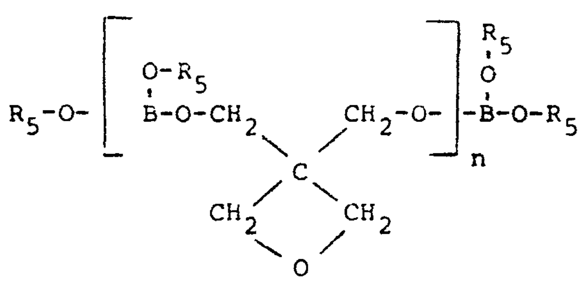

worin $R_5$ und "n" die für die Strukturformeln (IIIa) und (IIIb) genannte Bedeutung haben.

Erfindungsgemäß verwendbare Borsäureester sind auch solche von oxetangruppenhaltigen Monoalkoholen und aliphatischen, cycloaliphatischen oder heterocyclischen, oxetangruppenfreien Polyalkoholen, vorzugsweise Dialkoholen und/oder oxetangruppenfreien Polyhydroxyarylen, vorzugsweise Dihydroxyarylen.

Oxetangruppenfreie Polyalkohole sind beispielsweise solche mit 2 bis 20 C-Atomen wie etwa Äthylenglykol, 1,2-Propandiol, 2,2-Dimethylpropandiol, 2-Methylenpropandiol-1,3, 2,2-Dimethyl-4,4-dimethyl-cyclobutandiol-1,3, Glycerin, Trimethylolpropan, Pentaerythrit, Sorbit, Thiodiglykol, Diäthylenglykol, Triäthylenglykol, 2-Äthylpropandiol-1,3, 1,4-Butandiol, 1,4-Buten-2-diol, 1,6-n-Hexandiol, 4,4'-Bishydroxycyclohexyl-2,2-propan, Cyclohexyl-1,4-dimethanol, 1,3-Hydroxy-2,2,4,4-tetramethylcyclobutan.

Oxetangruppenfreie Polyhydroxyaryle sind beispielsweise solche mit 6 bis 30 C-Atome wie etwa Hydrochinon, Resorcin, Brenzcatechin, Di-t-butyl-brenzcatechin, 4,4'-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, $\alpha,\alpha'$-Bis-(hydroxyphenyl)-diisopropylbenzol sowie die entsprechenden kernalkylierten bzw. kernhalogenierten Verbindungen, beispielsweise Bis-(4-hydroxy-phenyl)-propan-2,2 (Bisphenol A), Bis-(4-hydroxy-3,5-dichlor-phenyl)-propan-2,2 (Tetrachlorbisphenyl A), Bis-(4-hydroxy-3,5-dibrom-phenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie $\alpha,\alpha'$-Bis-(4-hydroxyphenyl)-p-diisopropyl-benzol, Dihydroxynaphthaline, Dihydroxyanthracene, Phlorglucin , Pyrogallol, Bis-(2-hydroxy-3-tert.-butyl-phenyl)-methan, Bis(2-hydroxy-3-cyclohexylphenyl)-sulfid, Bis-(2-hydroxy-3-methylphenyl)-äther und Bis-(2-hydroxy-3-tert.-butyl-5-methylphenyl)-propan-2,2.

Oxetanhaltige Borsäureester mit oxetangruppenfreien Polyalkoholen sind beispielsweise

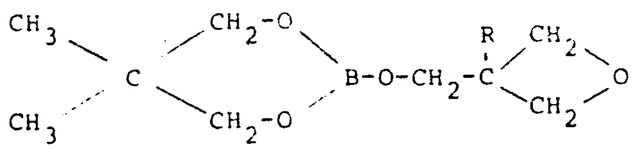

(mit R beispielsweise H oder $C_1$-$C_{18}$-Alkyl),

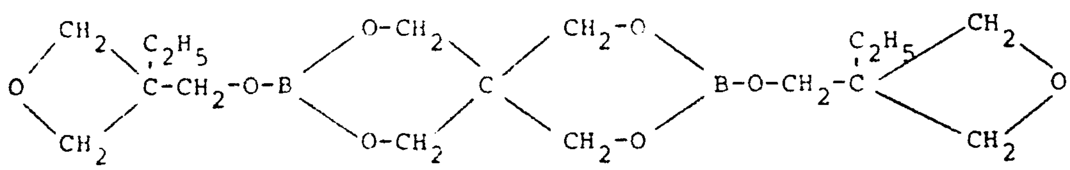

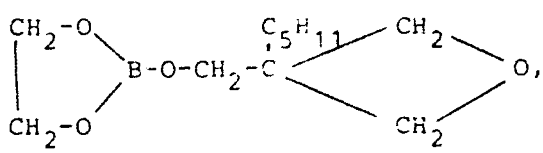

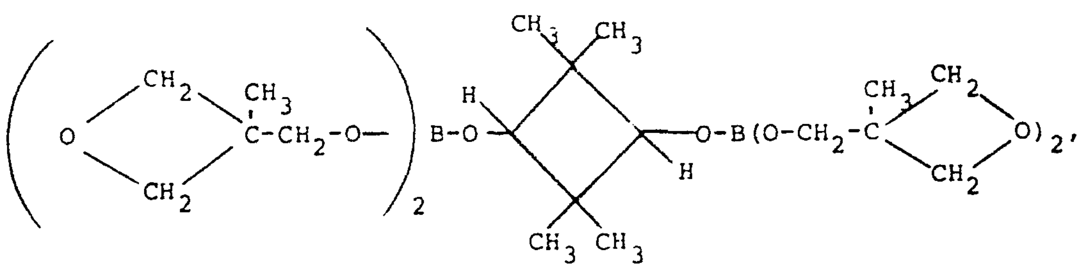

Oxetanhaltige Borsäureester mit oxetangruppenfreien Polyhydroxylarylen sind beispielsweise

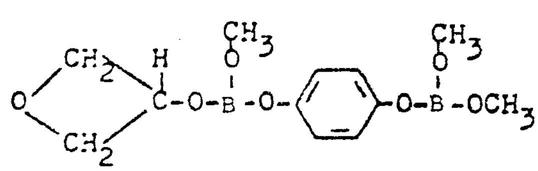

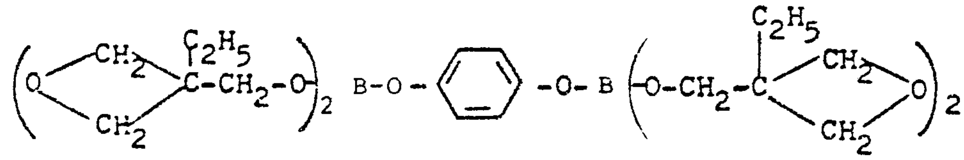

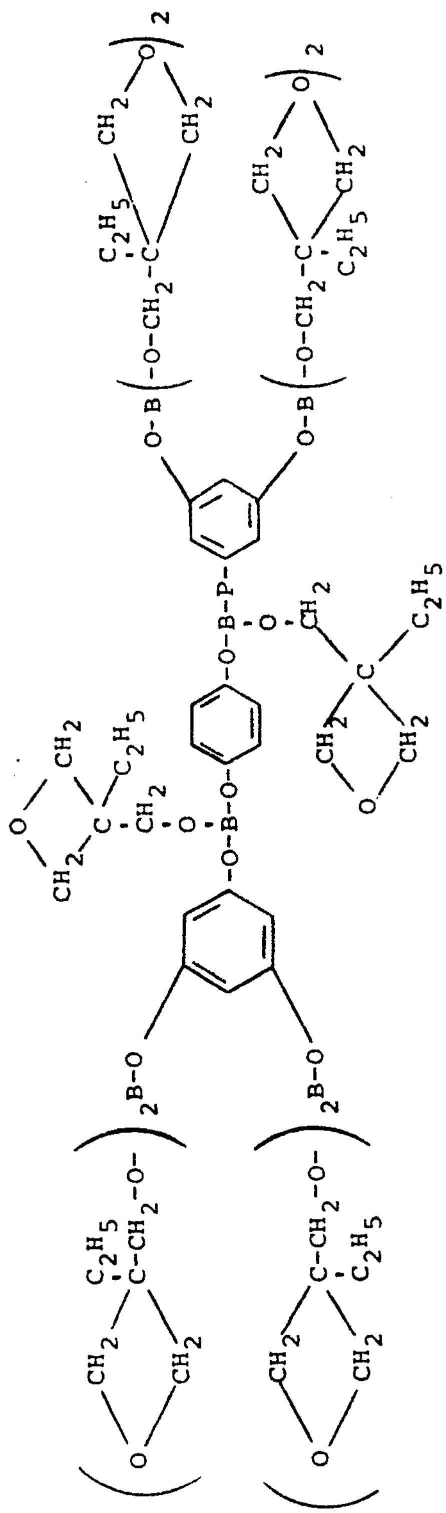

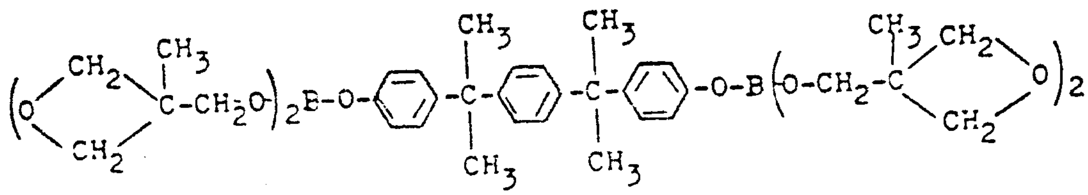

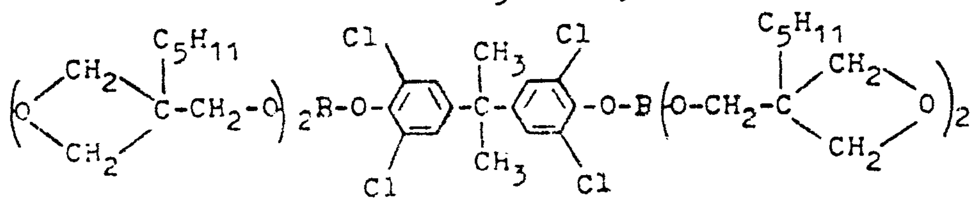

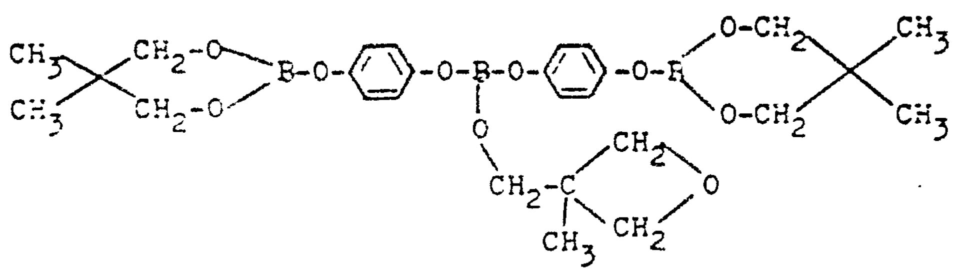

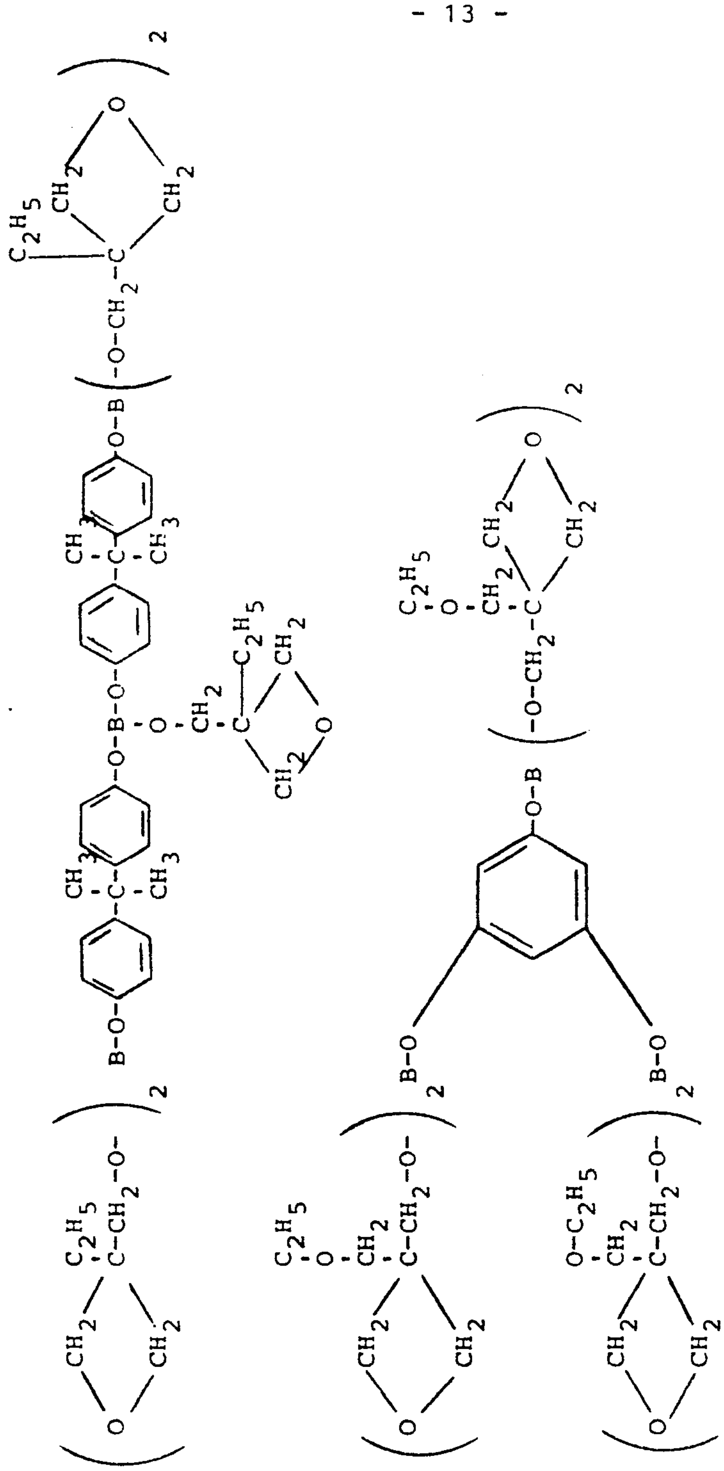

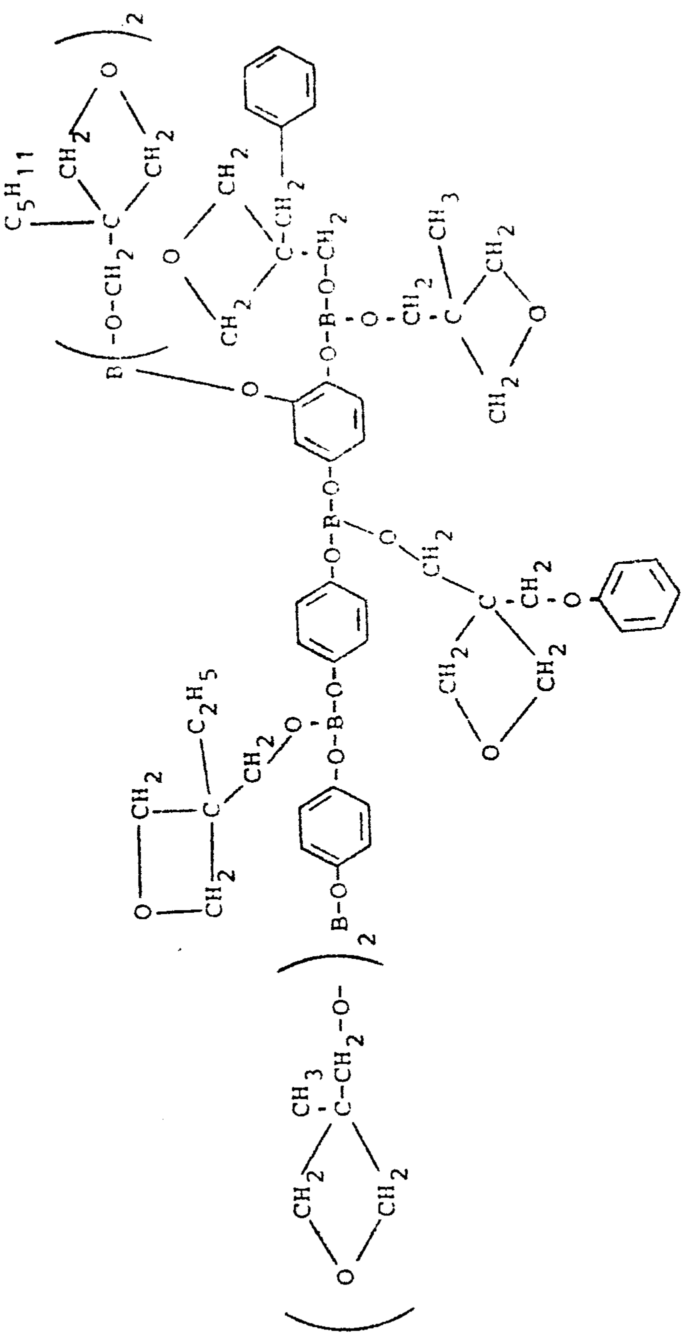

In den vorstehend genannten, erfindungsgemäß verwendbaren oxetanhaltigen Borsäureestern mit oxetangruppenfreien Polyalkoholen und/oder oxetangruppenfreien Polyhydroxyarylen können neben oxetangruppenhaltigen Monoalkoholen auch oxetangruppenfreie Monoalkohole und/oder oxetangruppenfreie Monohydroxyaryle mit eingebaut werden.

Erfindungsgemäß verwendbare Borsäureester sind schließlich auch solche aus oxetangruppenhaltigen Monoalkoholen und oxetangruppenhaltigen Poly-, vorzugsweise Dialkoholen, wobei gegebenenfalls oxetangruppenfreie Monoalkohole und/oder oxetangruppenfreie Monohydroxyaryle und/oder oxetangruppenfreie Polyalkohole und/oder oxetangruppenfreie Polyhydroxyaryle mit eingebaut sein können.

Die erfindungsgemäß verwendbaren oxetangruppenhaltigen Borsäureester können allein oder im Gemisch zu mehreren eingesetzt werden.

**Erfindungsgemäß bevorzugt verwendbare Borsäureester sind solche, deren Siedepunkte über 150°/0,1 Torr liegen.**

Ein ganz besonders bevorzugt verwendbarer Borsäureester ist das
Tris-(2,2-dimethylenoxid-butyl)-borat

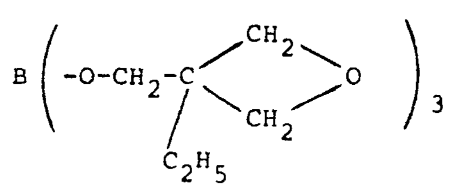

Die Herstellung der erfindungsgemäß verwendbaren Borsäureester kann in an sich bekannter Weise erfolgen, indem die entsprechenden Hydroxyverbindungen mit Borsäurehalogeniden in Gegenwart säurebindender Mittel umgesetzt werden oder indem niedere Alkyl- oder Arylester der Borsäure mit den genannten oxetangruppenhaltigen Alkoholen umgesetzt werden.

Bezüglich der Reaktionsbedingungen sei auf die Literaturstelle "Houben Weyl Methoden der Organischen Chemie, Band VI/2, Sauerstoffverbindungen I, Teil 2, Seiten 190 ff., Georg Thieme Verlag Stuttgart, 1963," verwiesen.

In Anlehnung an die dort beschriebenen Herstellungsmethoden verfährt man zur Herstellung des Tris-(2,2-dimethylenoxid)-butylborats vorteilhaft so, daß man den aus n-Butanol und Borsäure durch Erhitzen unter $H_2O$-Abspaltung leicht herstellbaren Tri-n-butylester der Borsäure mit 50-100 % molarem Überschuß der für die Bildung der genannten Verbindung erforderlichen Menge an 3-Äthyl-3-hydroxymethyloxetans in Gegenwart eines alkalischen Katalysators, wie z.B. Natriummethylat, durch Erhitzen umestert, wobei das gewünschte Produkt in ca. 70-75 %iger Ausbeute (nach Fraktionierung) anfällt.

Die Herstellung der erfindungsgemäß verwendbaren Borsäureester aus oxetangruppenhaltigen Polyalkoholen, aus oxetangruppenfreien Polyalkoholen und/oder oxetangruppenfreien Polyhydroxyarylen kann beispielsweise erfolgen, indem man z.B. ein Gemisch aus Tri-n-butylborat mit Bishydroxyphenyl-2,2-propan und der berechneten Menge an 3-Alkyl-3-hydroxyalkyloxetan durch Erhitzen, gegebenenfalls in Gegenwart von alkalischen Katalysatoren, wie z.B. Natriummethylat oder Kaliumcarbonat, umestert. Man kann derartige Ester auch in mehreren Stufen herstellen, indem man z.B. Borsäurealkyl- oder arylester mit den entsprechenden Mengen an 3-Alkyl-3-hydroxymethyloxetan umsetzt und die so gewonnenen Mischester mit mehrwertigen Alkoholen oder Phenolen umsetzt, wobei sich die am leichtesten siedenden Alkohole bzw. Phenole abspalten. Man kann auch Borsäureester, welche die Reste der weiter oben genannten Oxetan-haltigen Alkohole tragen, mit im Vergleich zu den entsprechenden oxetanhaltigen Alkoholen höhersiedenden aliphatischen Polyalkoholen oder Polyhydroxylarylverbindungen unter Abspaltung des aliquoten Teils der Oxetanalkohole umestern.

Als erfindungsgemäß gegebenenfalls mitverwendbare borfreie Oxetanverbindungen sind grundsätzlich alle verfügbaren geeignet, also beispielsweise die in den DT-OS 2 510 463, DT-OS 2 658 849, DT-OS 1 907 117 beschriebenen sowie die in der zusammenfassenden Übersicht von E.J. Goethals, Ind. Chim. Belge. T30, Nr. 6, S. 559 ff. beschrieben.

BAD ORIGINAL



Besonders geeignete borfreie Oxetanverbindungen sind beispielsweise
Oxalsäure-bis-(2,2-dimethylenoxid-butyl)-ester,
Bernsteinsäure-bis-(2,2-dimethylenoxid-butyl)-ester,
Maleinsäure-bis-(2,2-dimethylenoxid-butyl)-ester
Fumarsäure-bis-(2,2-dimethylenoxid-butyl)-ester,
Adipinsäure-bis-(2,2-dimethylenoxid-butyl)-ester
Kohlensäure-bis-(2,2-dimethylenoxid-butyl)-ester
3-Pentyl-3-hydroxymethyloxetan,
Kieselsäure-tetra-(2,2-dimethylenoxid-butyl)-ester
Tributyl-zinn-(2,2-dimethylenoxid-butyl)-ester und
Aluminium-tri-(2,2-dimethylenoxid-butyl)-ester.

Die Herstellung der borfreien Oxetanverbindungen kann gemäß der in E.J. Goethals, loc. cit. beschriebenen Methoden erfolgen.

Als erfindungsgemäß verwendbare oxetangruppenfreie Borsäureester sind grundsätzlich alle verfügbaren geeignet, also beispielsweise die in der DT-PS 1 239 471 bzw. dem US-PS 3 321 4[illegible] beschriebenen.

Geeignete oxetangruppenfreie Borsäureester sind beispielsweise Tri-n-octylborat, Tri-n-dodecylborat, Tri-cyclohexylborat, Glycerinborat, Trimethylоläthanborat, Borsäureester vom Typ der Boroxine wie beispielsweise Tri-butoxy-boroxin oder

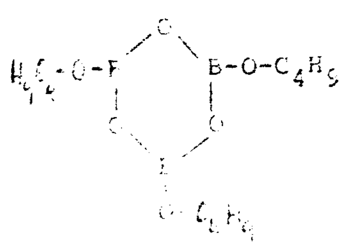

Triäthoxyboroxin

Besonders geeignete oxetangruppenfreie Borsäureester sind beispielsweise Borsäure-tri-octylat und Borsäure-tricyclohexylat.

Die Herstellung der oxetangruppenfreien Borsäureester kann gemäß "Houben Weyl, Methoden der Organischen Chemie, Band VI/2, Sauerstoffverbindungen I, Teil 2, Seiten 190 ff.", loc. cit. erfolgen.

Als erfindungsgemäß zu stabilisierende Polycarbonate kommen die durch Umsetzung von Dihydroxydiarylalkanen mit Phosgen oder Diestern der Kohlensäure nach bekannten Verfahren erhältlichen Polykondensate in Betracht, wobei neben den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet.

Die zu stabilisierenden Polycarbonate haben mittlere Gewichtsmittelmolekulargewichte $\bar{M}w$ zwischen 10 000 und 100 000, vorzugsweise zwischen 20 000 und 40 000, ermittelt durch Messungen der rel. Viskosität in $CH_2Cl_2$ bei 25°C und einer Konzentration von 0,5 Gew.-%.

Geeignete aromatische Dihydroxyverbindungen sind z.B. Hydrochinon, Resorcin, 4,4'-Dihydroxydiphenyl, Bis-(hydroxyphenyl)-alkane wie beispielsweise $C_1$-$C_8$-Alkylen- bzw. $C_2$-$C_8$-Alkyliden-bisphenole, Bis-(hydroxyphenyl)-cycloalkane wie beispielsweise $C_5$-$C_{15}$-Cycloalkylen- bzw. $C_5$-$C_{15}$-Cycloalkyliden-bisphenole, Bis-(hydroxy-phenyl)-sulfide, -äther,

-ketone, -sulfoxide oder -sulfone. Ferner α,α'-Bis-(hydroxyphenyl)-diisopropylbenzol sowie die entsprechenden kernalkylierten bzw. kernhalogenierten Verbindungen. Bevorzugt sind Polycarbonate auf Basis Bis-(3-hydroxy-phenyl)-propan-2,2 (Bisphenol a), Bis-(4-hydroxy-3,5-dichlor-phenyl)-propan-2,2 (Tetrachlorbisphenyl A), Bis-(4-hydroxy-3,5-dibrom-phenyl)-propan-2,2Tetrabrombisphenol A), Bis-(4-hydroxy-3,5-dimethyl-phenyl)-propan-2,2 (Tetramethylbisphenol A) Bis-(4-hydroxy-3-methyl-phenyl)-propan-2,2, Bis-(4-hydroxy-phenyl)-cyclohexan-1,1 (Bisphenol Z) sowie auf Basis von Dreikernbisphenolen wie α,α'-Bis-(4-hydroxyphenyl)-p-diisopropylbenzol.

Weitere für die Herstellung von Polycarbonat geeignete Bisphenole sind in den US-Patenten 3 028 365, 2 999 835, 3 148 172, 3 271 368, 2 970 137, 2 991 273, 3 271 367, 3 280 078, 3 014 891, 2 999 846 sowie in den deutschen Offenlegungsschriften 2 063 050 (Le A 13 359), 2 063 052 (Le A 13 425), 2 211 957 (Le A 14 240) und 2 211 956 (Le A 14 249) beschrieben.

Den zu stabilisierenden Polycarbonaten können die oxetangruppenhaltigen Borate sowohl einzeln als auch in Kombination miteinander in Mengen zwischen 0,01 bis 1 Gew.-%, vorzugsweise in Mengen zwischen 0,05 bis 0,2 Gew.-%, berechnet auf das Gewicht des reinen Polycarbonatharzes, zugesetzt werden.

Dies gilt auch für den komibinierten Zusatz von oxetangruppenhaltigen Boraten und borfreien Oxetanverbindungen sowie für den kombinierten Zusatz von oxetangruppenfreien Borsäureestern mit borfreien Oxetanverbindungen.

Für diese beiden Stabilisationsvarianten beträgt die Menge an zuzusetzendem Stabilisatorgemisch ebenfalls zwischen 0,01 und 1 Gew.-%, vorzugsweise zwischen 0,05 und 0,2 Gew.-%,

berechnet auf das Gewicht des reinen Polycarbonatharzes.

Die Herstellung der stabilisierten phosphitfreien Polycarbonate kann erfolgen, indem die erfindungsgemäß einzusetzenden Boratstabilisatoren bzw. die erfindungsgemäß einzusetzenden Borsäureester enthaltenden Stabilisatorgemische entweder in reiner Form dem geschmolzenen Polycarbonat oder gegebenenfalls als Lösung in einem niedrigsiedenden Lösungsmittel der Polycarbonatlösung zudosiert werden. Auch durch Tränkung des gepulverten oder granulierten Polycarbonats mit dem Boratstabilisator bzw. mit dem Borsäureester enthaltenden Stabilisatorgemisch, gegebenenfalls mit deren Lösungen in einem Lösungsmittel, in einer geeigneten Mischapparatur lassen sich die beanspruchten, gegen Verfärbung stabilisierten Polycarbonate herstellen. Die Aufarbeitung des stabilisierten Polycarbonats erfolgt dann nach bekannten Techniken, beispielsweise durch Extrusion mittels Ausdampfschnecke zu einem Strang und anschließende Granulierung zu Granulat. Entsprechendes gilt, wenn die Zudosierung des Borats während der Aufarbeitung des Polycarbonats nach bekannten Verfahren in der Schmelze bzw. in einem Lösungsmittel erfolgt.

Die erfindungsgemäß stabilisierten phosphitfreien Polycarbonate können außerdem die bekannten Zusätze wie beispielsweise Füllstoffe, Farbstoff, Pigmente, Formentrennmittel, UV-Stabilisatoren etc. enthalten, ohne daß dadurch die Wirkung der zugesetzten erfindungsgemäßen Stabilisatoren bzw. Stabilisatorgemische in den so erhaltenen phosphitfreien Polycarbonat-Formmassen beeinflußt würde.

Die erfindungsgemäß verwendbaren Stabilisatoren bzw. Stabilisatorgemische können auch zur Stabilisierung von bromiertem Polycarbonat enthaltenden phosphitfreien Polycarbonatgemischen in Kombination mit Ba-, Sr- oder Cacarbonat gemäß der deutschen Offenlegungsschrift 2 064 599 (MO 1167) eingesetzt werden. Die erfindungsgemäß verwendbaren Stabilisatoren bzw. Stabilisatorgemische können auch zur zusätzlichen Stabilisierung von phosphitfreien Polycarbonaten eingesetzt werden, welche gemäß DT-PS 1 239 471 bereits durch Zusatz von Estern oder Säuren des fünfwertigen Phosphors stabilisiert wird.

Die erfindungsgemäß stabilisierten phosphitfreien Polycarbonate bzw. Polycarbonat-Formmassen finden besonders dort Anwendung, wo die hergestellten Formkörper einer längeren hohen Wärmebelastung ausgesetzt sind und zudem für alle Gegenstände, für die eine hohe Lichtdurchlässigkeit verlangt wird. Das gilt bevorzugt für die Verwendung auf dem lichttechnischen Sektor, z.B. für Lampenabdeckungen oder Verglasungen mit Polycarbonatplatten und für Folien.

## Beispiele

### Herstellung des für die Stabilisierungstests verwendeten Polycarbonats

Ca. 454 Teile 4,4'-Dihydroxydiphenyl-2,2-propan und 9,5 Teile p-tert.-Butylphenol werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15 Minuten lang Stickstoff durch die Reaktionsmischung geleitet wird. Dann werden 355 Teile 45 %iger Natronlauge und 1000 Teile Methylenchlorid zugegeben. Die Mischung wird auf 25° abgekühlt. Unter Aufrechterhaltung dieser Temperatur durch Kühlen werden 237 Teile Phosgen während einer Zeitdauer von 120 Minuten zugegeben. Eine zusätzliche Menge von 75 Teilen einer 45 %igen Natronlauge wird nach 15 - 30 Minuten zugegeben bzw. nachdem die Phosgenaufnahme begonnen hat. Zu der entstandenen Lösung werden 1,6 Teile Triäthylamin zugegeben und die Mischung weitere 15 Minuten gerührt. Eine hochviskose Lösung wird erhalten, deren Viskosität durch Zugabe von Methylenchlorid reguliert wird. Die wäßrige Phase wird abgetrennt. Die organische Phase wird mit Wasser, salz- und alkalifrei gewaschen. Das Polycarbonat wird aus der gewaschenen Lösung isoliert und getrocknet. Das Polycarbonat hat eine relative Viskosität von 1,29 - 1,30, gemessen in einer 0,5 %igen Lösung von Methylenchlorid bei 20°. Das entspricht ungefähr einem Molekulargewicht von 32000. Das so gewonnene Polycarbonat wird extrudiert und granuliert.

Herstellung von Tris-/2,2-dimethylenoxid-butyl7-borat

235,2 g (1,02 Mol) Borsäuretributylester werden mit 712,5 g 3-Äthyl-3-hydroxyäthyloxetan vermischt. Dann werden 1,5 g Natriummethylat zugesetzt. Die Lösung wird unter Rühren und Einleiten von Stickstoff innerhalb von 3 Stdn. auf 160° hochgeheizt. Dabei destillieren über eine Kolonne 200 g Destillat bei einer Kopftemperatur von 117-118°C ab. Dann wird die Reaktionsmischung abgekühlt, die Kolonne abgenommen und ein Vakuum von 20 Torr angelegt. Unter diesen Bedingungen destillieren bei nochmaligem Aufheizen bis auf eine Sumpftemperatur von 120°C 24 g Destillat ab. Der Rückstand wird im Hochvakuum fraktioniert. Nach einem Vorlauf von 365 g, der von 75-165°/0,2 Torr übergeht, destilliert das Reaktionsprodukt im Bereich von 165-170°/0,2 Torr über. Es werden 256 g = 70,4 % der Theorie erhalten.

$n_{20}^{D}$ : 1,4627

| | | | | | | | |
|---|---|---|---|---|---|---|---|
| Analyse: | Gef. | C | 61,4-6 | H | 9,26 | B | 3,1 |
| | Ber. | | 50,76 | | 9,27 | | 3,09 |

Herstellung der Verbindung:

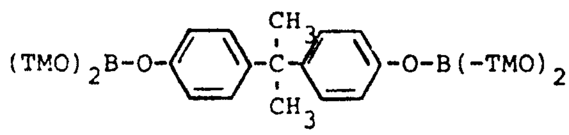

(TMO= 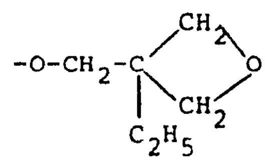

145 g Triphenylborat (0,5 Mol), 57 g Bisphenol A (0,25 Mol) und 120 g 3-Äthyl-3-hydroxyäthyl-oxetan werden unter Zusatz von 0,2 g Natriumethylat in einem mit einer Kolonne ausgestatteten Reaktionsgefäß unter Rühren und Überleiten von Stickstoff auf 120°C erhitzt und 1 Std. bei dieser Temperatur belassen. Dann wird Wasserstrahlvakuum angelegt und innerhalb 4 Std. auf 165°C aufgeheizt, wobei Phenol bei einer Kopftemperatur von 88°C abdestilliert. Das Gewicht des Destillates beträgt 110 g. Dann wird die Kolonne abgenommen und das Reaktionsgemisch nochmals im Hochvakuum auf 160°C aufgeheizt. Dabei destillieren nochmals 20,1 g ab. Der verbleibende Rückstand stellt ein sprödes nahezu farbloses Harz dar.

B ber. 3,05 %, B gef. 3,3 %.

Herstellung der stabilisierten Polycarbonatmassen

Das gemäß obiger Beschreibung hergestellte granulierte Polycarbonat wird mit den in der nachfolgenden Tabelle aufgeführten Mengen verschiedener Borate durch sogenanntes Auftrudeln vermischt. Danach wird das Granulat bei 300°C in einer Mischschnecke zu einem Strang extrudiert. Dieser Strang wird wiederum zu einem Granulat zerhackt, welches in einem Spritzgußautomaten bei 330°C zu Normprüfstäben verarbeitet wird.

I. Vergleichsversuch ohne Zusatz von Borat und Phosphit

II. Vergleichsversuch unter Verwendung von Tri-n-octyl-borat

III. Vergleichsversuch unter Verwendung einer Oxetanverbindung (gemäß DT-OS 2 658 849)

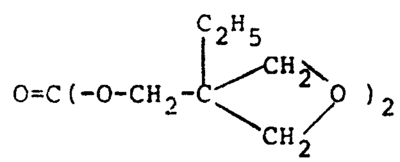

IV. Vergleichsversuch unter Verwendung eines oxetangruppenhaltigen Phosphits (gemäß DT-AS 2 140 207);

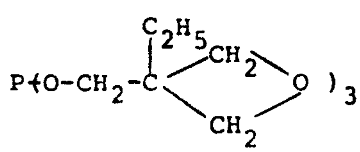

V. Vergleichsversuch unter Verwendung eines Gemisches aus einem Phosphit und einer Oxetanverbindung (gemäß DT-OS 2 510 463): Mischung aus 1 Mol 2-Phenoxy-5-äthyl-1,3-dioxaphosphorinan + 3 Mol 3-Methyl-3-hydroxymethyloxetan.

VI. Erfindungsgemäße Verwendung von Tris-(2,2-dimethyloxid-butyl)-borat.

VII. Erfindungsgemäße Verwendung einer Mischung von 1 Mol Tri-n-octylborat und 1 Mol Bis-(β-äthyl-oxetanyl-3-methyl)-adipinsäureester.

Wärmealterung

Die in der oben beschriebenen Weise hergestellten Prüfkörper wurden im Trockenschrank bei 140°C getempert. Mit Hilfe eines Spektralphotometers wurde die Lichttransmission gemessen. Der jeweilige Abfall der Lichttransmission bei 420 nm im Verlaufe der Wärmebehandlung dient als Maß für die zunehmende Verbräunung der Prüfkörpers (s. Tabelle).

Lichttransmission in % gemessen nach DIN 5036 von PC-Stäben bei 420 nm in einer Schichtdicke von 4 mm

| | Konzentration Stabilisator % | 0 | 1000 | 1500 | 2000 | 3000 Std. Temperung bei 140°C |
|---|---|---|---|---|---|---|
| I | 0 | 82,5 | 77 | 71,5 | 65 | 59 |
| II | 0,1 | 83,0 | 72,5 | 67,5 | 63,5 | 54,5 |
| III | 0,1 | 82,5 | 77 | 72 | 69 | 63 |
| IV | 0,1 | 86 | 78 | 73 | 69 | 60 |
| V | 0,1 | 84,5 | - | 73 | - | - |
| VI | 0,1 | 85,5 | 77 | 73 | 70 | 63,5 |
| VII | 0,1 | 85 | - | - | - | - |

Hydrolysetest

Eine Anzahl Makrolonformkörper, die mit und ohne Stabilisatoren hergestellt worden sind, mit dem Abmessungen 50 x 6 x 4 mm (sogenannte Normkleinstäbe) werden in einem elektrisch beheizten Rundkolben in siedendem destillierten Wasser gelagert. Nach Ablauf bestimmter Zeitintervalle werden jeweils 10 Stäbe entnommen und daran die Schlagzähigkeit gemäß DIN 53 453, 180/R 179, sowie die rel. Lösungsviskosität (in $CH_2Cl$ bei $25^{\circ}C$ und einer Konzentration von 0,5 Gew.-%) gemessen. Die erhaltenen Werte sind in der nachfolgenden Tabelle aufgeführt.

| Versuch | vor dem Kochen | | 200 Std. | | 300 Std. | | 1250 Std. | |
|---|---|---|---|---|---|---|---|---|
| | rel. Visk. | Schlagzähigkeit | rel. Visk. | Schlagzähigkeit | rel. Visk. | Schlagzähigkeit | rel. Visk. | Schlagzähigkeit |
| ohne Zusatz | 1,291 | n.g.[x)] | 1,273 | n.g. | 1,255 | n.g. | 1,211 | 8x 23,9<br>2x n.g. |
| 0,1 IV | 1,288 | n.g. | 1,177 | 5,0 | - | - | - | - |
| 0,1 VI | 1,286 | n.g. | 1,276 | n.g. | 1,266 | n.g. | 1,248 | 8x n.g.<br>2x 67,0 |

x) n.g. = nicht gebrochen

Patentansprüche

1. Verwendung von oxetangruppenhaltigen Borsäureestern, gegebenenfalls in Kombination mit borfreien Oxetanverbindungen, oder von Mischungen aus oxetangruppenfreien Borsäureestern mit borfreien Oxetanverbindungen zum Stabilisieren von phosphitfreien Polycarbonaten.

2. Verwendung von oxetangruppenhaltigen oder oxetangruppenfreien Borsäureestern jeweils in Kombination mit borfreien Oxetanverbindungen gemäß Anspruch 1, dadurch gekennzeichnet, daß in den Kombinationen das Molverhältnis von Boratomen zu Oxetangruppen zwischen 1:2 und 1:10 liegt.

3. Verwendung der Kombinationen gemäß Anspruch 2, dadurch gekennzeichnet, daß in den Kombinationen das Molverhältnis von Boratomen zu Oxetangruppen zwischen 1:3 und 1:6 liegt.

4. Phosphitfreie Polycarbonatformmassen, dadurch gekennzeichnet, daß sie oxetangruppenhaltige Borsäureester, gegebenenfalls in Kombination mit borfreien Oxetanverbindungen, oder daß sie Mischungen aus oxetangruppenfreien Borsäureestern mit borfreien Oxetanverbindungen in Mengen zwischen 0,01 und 1 Gew.-%, bezogen auf das Gewicht des reinen Polycarbonatharzes, enthalten.

5. Phosphitfreie Polycarbonatformmassen gemäß Anspruch 4, dadurch gekennzeichnet, daß sie oxetangruppenhaltige Borsäureester, gegebenenfalls in Kombination mit borfreien Oxetanverbindungen, oder daß sie Mischungen aus oxetangruppenfreien Borsäureestern mit borfreien Oxetanverbindungen in Mengen zwischen 0,05 und 0,2 Gew.-%, bezogen auf das Gewicht des reinen Polycarbonatharzes, enthalten.

6. Verfahren zum Stabilisieren von phosphitfreien Polycarboant-Formmassen, dadurch gekennzeichnet, daß man oxetangruppenhaltige Borsäureester, gegebenenfalls in Kombination mit borfreien Oxetanverbindungen, oder daß man Mischungen aus oxetangruppenfreien Borsäureestern mit borfreien Oxetanverbindungen in Mengen zwischen 0,01 und 1 Gew.-%, bezogen auf das Gewicht des reinen Polycarbonatharzes, nach bekannten Methoden einarbeitet.

7. Stabilisierte phosphitfreie Polycarbonatformmassen erhältlich gemäß Verfahren des Anspruchs 6.